# EUROPEAN PATENT APPLICATION

(11) **EP 4 786 222 A1**
(43) Date of publication of application: **05.08.2026**
(21) Application number: 25155672.6
(22) Date of filing: 03.02.2025
(51) Int. Cl.: B60H 1/00, B60H 1/32, F04B 39/00, F04B 39/12, F04B 39/14

(54) **ONE-PIECE CASING INTENDED TO ENCAPSULATE A COMPRESSION UNIT OF A HEAT PUMP ASSEMBLY AND SUCH HEAT PUMP ASSEMBLY**

(71) Applicant: Valeo Electrification, 95892 Cergy Pontoise (FR)
(72) Inventor: FIENE, Andreas, 96476 Bad Rodach (DE); SESHA-SAI, Lohith-Sriram-Pavan, 600130 Chennai (IN); KANAGARAJ, Dhineshkumar, 600130 Chennai (IN); DALKIDIS, Charilaos, 96476 Bad Rodach (DE)
(74) Representative: Valeo Powertrain Systems

(57) **Abstract**

The invention concerns a one-piece casing (100) intended to encapsulate a portion (11) of a compression unit (10) of a heat pump module (500), **characterized in that** it comprises :

- an inner skin (101) having a complementary form to said portion (11) of the compression unit (10),
- an outer skin (102) comprising at least one housing portion (110, 120, 130) configured to accommodate an external component among a heat exchanger, an accumulator, a valve block assembly, said housing portion (110, 120, 130) comprising an interconnection surface (111, 121, 131) being of complementary form to said external component,
- a junction surface (103) intended to surround the portion (11) of the compression unit (10), the inner skin (101) and the outer skin (102) extending from the junction surface (103) on one side of the junction surface (103).

## Description

### TECHNICAL FIELD

The invention relates in general to refrigerant heat pump systems, and in particular to a compressor encapsulation frame intended to encapsulate a portion of a compression unit of a heat pump module. The invention also covers a heat pump assembly comprising such compressor encapsulation frame.

In hybrid and electric vehicles, a refrigerant heat pump system contributes to the cooling and heating of the interior of the vehicle but also the cooling and heating of the battery. Such a refrigerant heat pump system operates thanks to an electrical compressor. Air or a refrigerant is fed to the compressor, the compressor compresses it and subsequently discharges it. The main component of a refrigerant heat pump system is the compressor required to compress the refrigerant. Such a refrigerant heat pump module is typically attached to the vehicle chassis. It raises various problems.

On the one hand, the compressor is a source of vibrations when running. These vibrations constitute noise generated by their transmission to the vehicle on which the refrigerant heat pump module is installed.

Noise associated to the vibrations from the refrigerant heat pump module should be reduced as much as possible. For that purpose, existing solutions use damper elements. For example, one damper element may be firmly screwed to the chassis of the vehicle, and another damper element may be fixed to the housing of the refrigerant heat pump module, for example the compressor.

On the other hand, refrigerant heat pump systems have increased in complexity over time, and became more and more cumbersome. However, due to weight and space constraints in the automotive industry, designing compact heat pump modules is becoming the main trend. Solutions of the prior art propose heat pump modules in which the compressor is encapsulated within a tubular body in two parts which are fastened to each other. The associated air-conditioning components, such as valve groups, heat exchangers, etc. are connected to the compressor in a traditional manner. These solutions are not totally satisfactory as they are not compact.

The invention aims to overcome all or some of the abovementioned problems by proposing a casing for a refrigerant heat pump module being a light weight module frame, facilitating the assembly process of a complex heat pump module.

### GENERAL DEFINITION OF THE INVENTION

To this end, one subject of the invention is a one-piece casing intended to encapsulate a portion of a compression unit of a heat pump module, characterized in that it comprises:
- an inner skin having a complementary form to said portion of the compression unit,
- an outer skin comprising at least one housing portion configured to accommodate an external component among a heat exchanger, an accumulator, a valve block assembly, said housing portion comprising an interconnection surface being of complementary form to said external component,
- a junction surface intended to surround the portion of the compression unit, the inner skin and the outer skin extending from the junction surface on one side of the junction surface.

As it will appear in the following, the one-piece casing is intended to be positioned in relation to the compression unit so as to cover the upper portion of the compression unit.

The casing of the invention enables to carry additional components, such as heat pump components. The invention makes it possible to easily connect a large variety of external components to the one-piece casing, without any additional connection systems. One or more external components can therefore be mounted to the one-piece casing from independent directions around the compression unit. They can be mounted by screwing or clipsing.

This results in a compact and modular casing for the compression unit and the associated components of a heat pump assembly.

According to an optional feature of the invention, the one-piece casing is made of plastic. Such a one-piece casing is easy to produce thanks to well-controlled injection moulding processes. Furthermore it results in a light-weight casing having lower cost compared with a metal casing.

According to an optional feature of the invention, one of the at least one housing portion is a chamber configured to accommodate a first part of a heat exchanger, the chamber comprising an outer rim delimiting an internal container for the first part of the heat exchanger and an abutment for a surface of the first part of the heat exchanger, so as to position the heat exchanger in relation to the one-piece casing.

The chamber is an accommodation for the heat exchanger. It carries it on the one-piece casing and positions it in regards to the one-piece casing. The walls delimiting the internal space of the chamber together with the abutment enable to ensure the right positioning of the heat exchanger within the chamber. The one-piece casing therefore foresees a dedicated space for lodging the heat exchanger. As each housing portion has the complementary shape of the external component it is intended to accommodate, the dedicated space is both an accommodation and a position means for the external component. The shape of the housing portion enables to position the external component in regards to the one-piece casing perpendicularly to the main direction of the housing portion and sideways.

According to an optional feature of the invention, one of the at least one housing portion is an accumulator compartment configured to accommodate an accumulator bottle, the interconnection surface of the accumulator compartment presenting a curved surface. The particular shape of the one-piece casing enables not only to position the accumulator bottle in regards to the one-piece casing, but also to make the accumulator bottle coincide perfectly with the outer skin of the one-piece casing. The accumulator bottle is connected to the one-piece casing thanks to fixing means, for example a bracket surrounding part of the accumulator bottle, the bracket having two ends, each one being connected to the one-piece casing.

The invention also concerns a sealed envelope intended to encapsulate a compression unit, comprising:
- a one-piece casing as described above intended to encapsulate a first portion of the compression unit,
- a housing, preferably made of plastic, intended to encapsulate a second portion of the compression unit, said housing comprising a joining surface intended to surround the second portion of the compression unit and forming a surface contact with the junction surface.

In an optional embodiment of the invention, the housing further comprise at least one housing portion configured to accommodate an external component among a heat exchanger, an accumulator, a valve block assembly. Following this, the sealed envelope intended to encapsulate the compression unit may comprise one or more housing portion for external component(s), either on the one-piece casing only or on the one-piece casing and on the housing.

The sealed envelope is obtained by joining the one-piece casing and the housing along the junction surface of the one-piece casing and the joining surface of the housing. The one-piece casing and the housing can be bolted together or held together by any appropriate fixing means. When in used, the compression unit is placed inside the sealed envelope and is entirely wrapped by the sealed envelope. The compression unit is therefore protected from all aggressions, for example external shocks, humidity, or dust. The sealing of the one-piece casing and the housing is performed according to the junction surface. The junction surface may extend in a junction plane, or the junction surface may extend according to distinct planes. As an alternative, the junction surface may be curved.

The invention also covers a heat pump module for a vehicle comprising a compression unit having a first portion and a second portion, and the sealed envelope as described above comprising:
- the one-piece casing encapsulating the first portion of the compression unit,
- the housing encapsulating the second portion of the compression unit, the joining surface surrounding the second portion of the compression unit.

The heat pump module of the invention enables to encapsulate the compression unit between the one-piece casing and the housing. As mentioned above, the sealing of one-piece casing with the housing is performed along the junction surface. The first portion of the compression unit is lodged inside the one-piece casing, i.e. above the junction surface and the second portion of the compression unit is lodged inside the housing, i.e. below the junction surface. In other words, the junction surface separates the sealed envelope lengthwise. As the sealed envelope is intended to be suspended to a chassis of a vehicle, the longitudinal position of the junction surface ensures the robustness of the whole sealed envelope and thus the robustness of the heat pump module.

Thanks to the invention, the heat pump module of the invention offers a low space consumption compared to heat pump modules of the prior art with separate component fixations and module frame.

According to an alternative of the invention, both the one-piece casing and the housing are made of a composite material such as organosheet. Such a material offers a combination of strength, flexibility and lightness, and feature a high strength-to-weight ratio.

According to an optional feature of the invention, the heat pump module comprises an acoustic layer, typically 15 to 30 mm thick, disposed between the compression unit and the sealed envelope. The acoustic layer may be composed of foam.

Thanks to the acoustic layer, the compression unit does not form any direct contact with the sealed envelope. The acoustic layer absorbs the high frequencies when the compression unit is running. It can contribute to a noise reduction of the order of 10% compared with solutions without any acoustic layer.

In an optional feature of the invention, the acoustic layer is press fitted onto the compression unit. The acoustic layer has the external form of the compression unit and fits perfectly on the compression unit. In other words, the outer skin of the compression unit and the inner skin of the acoustic layer are mostly identical. It should be understood that the distance between the outer skin of the compression unit and the inner skin of the acoustic layer is a few millimeters at most.

The invention also concerns a heat pump assembly for a vehicle, particularly for an electric vehicle, comprising a heat pump module as described above and at least one external component among a heat exchanger, an accumulator, a valve block assembly, accommodated in at least one housing portion of the one-piece casing.

Thanks to the specific shape of the one-piece casing, the external component(s) are carried by the one-piece casing. The heat pump assembly of the invention forms an assembly integrating the external components in a compact way. The heat pump assembly of the invention regroups the external components in a reduced volume compared with solutions of the prior art. The heat pump assembly contributes to the reduction of weight and volume within the vehicle in which it is embedded.

According to an optional feature of the invention, one of the at least one external component is a heat exchanger, preferably a chiller, a first part of the heat exchanger being disposed in the internal container, a surface of the first part of the heat exchanger being in abutment against the abutment of the chamber, thereby creating an air insulation layer between the heat exchanger and the interconnection surface of the internal container. The creation of the air insulation layer minimizes the heat transfer from the compression unit to the heat exchanger. This feature is of particular interest as it makes possible to place a heat-sensitive component, such as the chiller and the cover, that may comprise plastic or foam elements, in the near vicinity of a heat-emitting source, such as the compression unit. This arrangement is a feasible solution thanks to the air insulation layer.

According to an optional feature of the invention, the heat pump assembly comprises a cover encapsulating a second part of the heat exchanger and abutting the outer rim of the chamber.

The cover forms a protection for the chiller. Combined with the air insulation layer, the cover forms a protective box for the heat exchanger. The obtained protection for the chiller is twofold: on the one hand a thermal protection in regards to the heat provided by the compression unit is performed with the air insulation layer, and on the other hand, the cover protects the chiller against external shocks and moisture.

According to an optional feature of the invention, the heat pump assembly comprises decoupling elements connected to the housing and a chassis of the vehicle. The decoupling elements are added to the housing and fixed to the chassis. They decouple the sealed envelope to the vehicle chassis. The decoupling elements may be in rubber. Their role is to decrease the noise from the compression unit by absorbing the low frequencies. Combined with the acoustic layer surrounding the compression unit, it results in a decrease of the noise from the compression unit when running.

According to another optional feature of the invention, the housing may comprise at least one aperture on the lower part, that is to say on the part opposite to the junction surface. This aperture makes it possible to drain water from the compression unit and avoid water accumulation inside the sealed envelope.

According to another optional feature of the invention, the sealed envelope may comprise a guide groove intended to lodge pipes required to connect the external components of the heat pump assembly.

### BRIEF DESCRIPTION OF THE FIGURES

Further features, details and advantages of the invention will become apparent upon reading the description given with reference to the appended drawings, which are given by way of example an in which:
[Fig. 1] is an isometric view of the one-piece casing according to the invention,
[Fig. 2] is another view of the one-piece casing of the invention,
[Fig. 3] represents a compression unit inserted into a bottom housing of a heat pump module according to the invention,
[Fig. 4] represents a heat pump assembly of the invention, on which air-conditioning components are installed.

### DETAILED DESCRIPTION

The characteristics, variants and various embodiments of the invention, as they have been described or as they will be presented in the detailed description which follows, can be associated with each other, according to various combinations, to the extent that they are not incompatible or exclusive with respect to each other. In particular, it will be possible to imagine variants of the invention comprising only a selection of characteristics described subsequently isolated from the other characteristics described, if this selection of characteristics is sufficient to confer a technical advantage and/or to differentiate the invention compared to the prior art.

For the sake of clarity, the same elements are designated by the same references in the different figures.

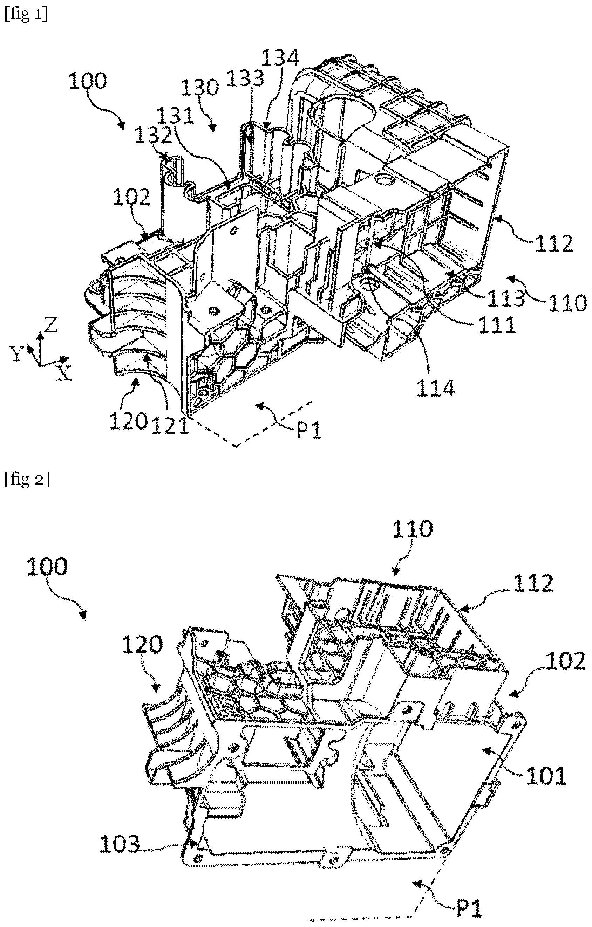

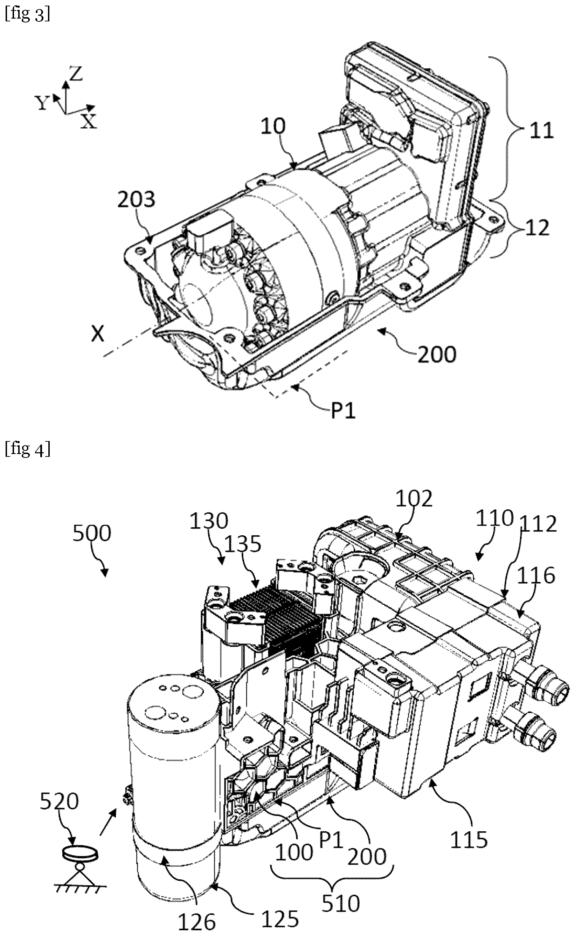

Figure 1 is an isometric view of the one-piece casing 100 according to the invention, and figure 2 is another view of the one-piece casing 100 of the invention. Such a one-piece casing 100 is intended to partly receive a compression unit 10 of a heat pump module 500. More precisely, a compression unit 10 can be considered as extending according to a main axis X. It can be divided lengthwise by a plane P1 (containing the main axis X) in two portions 11, 12. The portion 11 is above the plane P1 and the portion 12 is below the plane P1. As can be seen in figures 1 and 3, the one-piece casing 100 is configured to encapsulate the portion 11 of the compression unit 10. The one-piece casing 100 therefore encapsulates the upper part 11 of the compression unit 10.

The one-piece casing 100 comprises an inner skin 101 (visible in figure 2) having a complementary form to the upper portion 11 of the compression unit 10. The inner skin 101 may be seen as a surface facing the inside of the one-piece casing, thereby delimiting an internal space intended to accommodate the upper portion 11 of the compression unit 10. The complementary form of the inner skin 101 to the upper portion 11 means that the one-piece casing 100 is formed such that the inner skin 101 is as closely as possible to the upper portion 11. As a consequence, the inner skin 101 follows the shape of the upper portion 11 of the compression unit 10 for the sake of compactness of the one-piece casing. In other words, the one-piece casing 100 surrounds the portion 11 of the compression unit 10 as closely as possible. The distance between the inner skin and the external surface of the compression unit is in the order of a few millimeters.

The one-piece casing 100 comprises an outer skin 102. The outer skin 102 extends along the external surface of the one-piece casing 100. It is to be understood that the one-piece casing is defined between its inner skin 101 and its outer skin 102, and forming an accommodation for the upper part of the compression unit in the internal shape.

The outer skin 102 comprises at least one housing portion, each configured to accommodate an external component, for example an additional air-conditioning component. As a non-limitative example, and as can be seen in figure 1, the outer skin 102 comprises a first housing portion 110 configured to accommodate a heat exchanger, a second housing portion 120 configured to accommodate an accumulator, and/or a third housing portion 130 configured to accommodate a heat exchanger. It is to be noted that the first, second and third housings are examples of possible embodiments. In the framework of the invention, the inner skin 102 may comprise other housing of various forms and dimensions provided that these forms and dimensions corresponds to the forms and dimensions of an external components to be connected to the one-piece casing 100.

Contrary to the prior art solutions offering a casing with a smooth outer skin, the casing of the invention enables to carry additional components, such as air-conditioning components.

Each housing portion comprises an interconnection surface of complementary form to the external component it is intended to accommodate. When the external component is in place within the corresponding housing, the interconnection surface is as closely as possible to the external surface of the external component that is facing the interconnection surface. As a consequence, the outer skin 102 locally follows the shape of the external components it is intended to receive in its housings.

Advantageously, the interconnection surface can constitute an abutment for the external component. For example, when considering the housing portion 110 for a heat exchanger, the interconnection surface 111 may have a complementary form of a surface of the heat exchanger intended to face the interconnection surface 111, so that the surface of the heat exchanger might come into contact with the interconnection surface 111 and abuts against the interconnection surface to ensure the right positioning of the heat exchanger in the housing portion 110.

The one-piece casing 100 comprises a junction surface 103. As represented, but as a non-limitative manner, the junction surface 103 extends in a junction plane. The junction plane may correspond to the plane P1 identified above to determine the upper portion and the lower portion of the compression unit 10. Nevertheless, the invention is not limited by such a plane. As mentioned before, the junction surface 203 may extend partly according to a plurality of planes or according to a curved surface. In the following, the invention will be described with a junction surface 103 extending according to the plane P1. But further to what was said above, a person skilled in the art understands that this configuration is not limitative of the scope of the invention and the invention similarly applies to a one-piece casing presenting a junction surface 103 with various other geometrical properties.

The junction surface 103 is intended to surround the portion 11 of the compression unit 10. As a reminder, the first portion 11 of the compression unit 10 is defined from the plane P1 and extends above the plane P1. The one-piece casing 100 extends between its inner skin and outer skin above the plane P1. This means that the inner skin 101 and the outer skin 102 extend from the junction surface 103 on one side of the junction surface.

The outer skin 102 forms an interface between the one-piece casing and external components. This feature makes it possible to carry and connect various components on the one-piece casing.

According to an optional feature of the invention, the one-piece casing is made of plastic. Such a one-piece casing is a light-weight casing. On top of that, a one-piece casing in plastic is easy to produce thanks to processes like injection moulding. Such processes offer the possibility of enabling various forms for the casing by adapting the form of the mould.

As visible in figure 1 and already mentioned above, one housing portion is a chamber configured to accommodate a first part of a heat exchanger. These housing portions are the portions 110 and 130 in figure 1. Each of these chambers comprises an outer rim 112, 132 delimiting an internal container 113, 133 for the first part of the heat exchanger. Each of the chambers 110, 130 comprises an abutment 114, 134 for a surface of the first part of the heat exchanger, so as to position the heat exchanger in relation to the one-piece casing.

When considering the housing portion 110 intended to accommodate a chiller, the internal container 113 is intended to accommodate a first part of the chiller. In other words, when mounted on the one-piece casing, the first part of the chiller is inserted into the housing portion 110. The first part of the chiller occupies the space in the internal container 113. The interconnection surface of the chamber 110 is extending in the plane XZ, that is to say in a plane perpendicular to the plane P1. The walls of the chamber 110 extend perpendicularly to the interconnection surface and end at the outer rim 112. The chamber 110 is defined by the volume delimited by the interconnection surface and the walls.

The housing portion 110 comprises the abutment 114 positioned on the interconnection surface. Hence, when inserted into its chamber 110, the chiller abuts against the abutment 114, thereby positioning it along the Y axis, that is to say perpendicularly to the interconnection surface. The walls of the chamber 110 enable to carry the chiller on the one-piece casing while positioning it within the chamber 110 by avoiding any translation in the XZ plane.

The housing portion 130 intended to accommodate a heat exchanger 135 (visible in figure 4). The housing portion 130 defines the internal container 133 intended to accommodate a first part of the heat exchanger. The internal container 133 is delimited on the sides by the walls extending perpendicularly to the outer skin 102, from the interconnection surface to the outer rim 132 of the housing portion 130. The housing portion 130, also called a chamber for the heat exchanger 135, comprises the interconnection surface 131 which corresponds to the bottom of the chamber 135. It is to be understood that the internal volume of the chamber 135 expands between the interconnection surface 131 and the side walls. The heat exchanger 135 is to be inserted into the chamber 135. The interconnection surface 131 and the side walls contribute to position the heat exchanger in regards to the one-piece casing. The housing portion 130 also comprises an abutment 134. This abutment 134 can be obtained by the outer rim 132 and/or by the interconnection surface 131. When inserted into the chamber 135, the heat exchanger is positioned thanks to the walls of the chamber 135 and abuts against the outer rim 132 and/or the interconnection surface 131. Its right positioning is therefore ensured.

One housing portion is an accumulator compartment 120 configured to accommodate an accumulator bottle 125. As visible in figure 4, the accumulator has a form of a cylinder. The accumulator has an external curved surface. Following this, the interconnection surface 121 of the accumulator compartment 120 presents a curved surface. The external curved surface of the accumulator bottle 125 is intended to be inserted in the accumulator compartment 120 and abut against the interconnection surface 121. When in position, the accumulator bottle 125 may be attached to the one-piece casing by ways of appropriate fixing means, for example a ring 126 surrounding the bottle 125, so as to fix the bottle 125 to the one-piece casing.

This feature enables the positioning of the accumulator bottle in regards to the one-piece casing.

The particular shape of the one-piece casing makes it possible to assembly and easily connect external components to the one-piece casing. Besides being a compact and low-weight piece, the one-piece casing of the invention offers a high adaptability to conform with air-conditioning components that might be connected to the casing.

Figure 3 represents a compression unit 10 inserted into a bottom housing 200 of a heat pump module 500 according to the invention. The compression unit 10 extends along the X-axis. As mentioned above, the compression unit 10 has a first portion 11 and a second portion 12. The second portion 12 is considered as a bottom part of the compression unit 10. The second portion 12 is the portion of the compression unit 10 that is intended to be housed in the bottom housing 200 of a heat pump module. More precisely, the invention also covers a sealed envelope 510 intended to encapsulate the compression unit 10. The sealed envelope 510 is composed of the one-piece casing 100 that is the upper part of the sealed envelope and the housing 200 that is the bottom part of the sealed envelope. For the same reason as for the one-piece casing 100, the housing 200 may be made of plastic. The housing 200 comprises a joining surface 203 that extends in the junction plane P1. As already mentioned, the joining surface 203 extending in the junction plane P1 is a variant of the invention. The invention also applies in the same manner to any other kind of joining surface 203, for example that extends in a plurality of planes connected via a deflection, or a curved joining surface.

As can be seen in figure 3, the joining surface 203 delimits an inside space in the housing 200. When the compression unit 10 is placed inside the housing 200, the joining surface 203 surrounds the second portion 12 of the compression unit 10. The joining surface 203 also forms a surface contact with the junction surface 103 of the one-piece casing 100. The one-piece casing 100 is to be placed above the housing 200. Together, the one-piece casing 100 and the housing 200 forms the sealed envelope 510. When the compression unit 10 is placed inside the sealed envelope, the junction surface 103 of the one-piece casing 100 is in contact with the joining surface 203 of the housing 200. Thanks to this surface contact between the junction surface and the joining surface, the sealed envelope is closed and wraps the compression unit 10. From the description made above, it appears clear that the surface contact is obtained in the plane P1 which is a virtual separation between the first portion 11 and the second portion 12 of the compression unit 10 as well as the physical separation between the one-piece casing 100 and the housing 200. This arrangement facilitates the assembly of the compression unit 10 inside the sealed envelope: the compression unit 10 is placed inside the housing 200, the one-piece casing 100 is superimposed on the housing 200 so that its junction surface 103 coincides with the joining surface 203 of the housing 200. The one-piece casing and the housing can be fixedly connected together by an appropriate fixing system, screws for example.

The invention also concerns a heat pump module 500 for a vehicle comprising a compression unit 10. Such a heat pump module comprises the one-piece casing 100 described above. The one-piece casing 100 encapsulates the first portion 11 of the compression unit 10. The heat pump module 500 also comprises the housing 200 as described above. The housing 200 encapsulates the second portion 12 of the compression unit 10. The connection between the housing 20 and the one-piece casing 100 is performed at the contact between both, i.e. the joining surface 203 of the housing 200 is in contact with the junction surface 103 of the one-piece casing 100. From the description above, it is to be understood that the joining surface 203 of the housing 100 surrounds the second portion 12 of the compression unit 10, while the junction surface 103 of the one-piece casing 100 surround the first portion 11 of the compression unit 10.

This arrangement results in the encapsulation of the compression unit 10 between the one-piece casing 100 and the housing 200. Both the one-piece casing 100 and the housing 200 have an inner skin presenting a complementary form to the portion of the compression unit they are facing to, the sealed envelope is space-saving. It can also be mentioned that due to the assembly of each part (one-piece casing and housing) around the compression unit, the resulting sealed envelope is maintenance-friendly, as the opening of the sealed envelope to access the compression unit is quite simple.

According to an optional feature of the invention, the heat pump module 500 comprises an acoustic layer (not depicted in the figures), typically 15 to 30 mm thick and for example made of foam, disposed between the compression unit 10 and the sealed envelope 510. Interleaving the acoustic layer between the compression unit 10 and the sealed envelope 510 avoids any direct contact between the compression unit 10 and the sealed envelope 510. The acoustic layer contributes to decrease the noise from the compression unit 10 by absorbing the high frequencies emitted by the compression unit 10.

Preferably, the acoustic layer is press fitted onto the compression unit 10. In other words, the acoustic layer is shaped like the compression unit 10. Therefore the acoustic layer is contoured to closer match the shape of the compression unit 10. So configured, the acoustic layer 300 is placed at the closest from the vibration source to better decrease the resulting noise.

Figure 4 represents a heat pump assembly for a vehicle, particularly for an electric vehicle, comprising the heat pump module of the invention on which air-conditioning or heat pump components are installed. As detailed above, the heat pump module 500 comprises the compression unit 10 disposed inside the sealed envelope 510, optionally with the acoustic layer disposed between the compression unit 10 and the sealed envelope 510.

According to the invention, the heat pump assembly comprises at least one external component disposed on the one-piece casing 100 of the sealed envelope 510. The external component(s) may be one or more of a heat exchanger 115, 135, an accumulator 125, a valve block assembly. Accommodated in the corresponding housing portion 110, 120, 130 of the one-piece casing 100, the external components are gathered on the one-piece casing 100, in various directions around the one-piece casing. The invention leads to the integration of the external components into the one-piece casing 100. The heat pump assembly can be seen as a single element that includes the air-conditioning or heat pump components carried by the one-piece casing.

As an example, one external component is a heat exchanger 115, preferably a chiller 115. A first part of the heat exchanger is disposed in the internal container 113. Further to the description of the one-piece casing previously made, a surface of the first part of the heat exchanger is in abutment against the abutment of the chamber. The abutment enables to position the chiller 115 in regards to the internal container 113. The form of the interconnection surface 111 and the abutment creates an air insulation layer between the heat exchanger and the interconnection surface of the internal container 113. To sum up, the first part of the chiller 115 is inserted into the internal container 113. The surface of the chiller 115 facing the interconnection surface 111 does not totally contact the interconnection surface 111. A thin layer of air extends between said surface of the chiller and the interconnection surface 111. This thin layer forms an air insulation so as to minimize heat transfer from the compression unit 10 to the chiller 115.

The heat pump assembly according to the invention may further comprise a cover 116 encapsulating a second part of the chiller 115. The cover 116 forms a protection layer of the chiller 115 against external shocks. The cover 116 abuts the outer rim 112 of the chamber 110. In other words, a first part of the chiller 115 is accommodated inside the chamber 110 and a second part of the chiller is accommodated in the cover 116. The cover 116 is rigidly fixed to the chamber 110 by appropriate fixing means, such as screws.

The combination of the chamber 110 (being also called the housing portion 110) and the cover 116, together with the air insulation layer between the interconnection surface of the chamber 110 and the facing surface of the chiller, forms a thermal and physical insulation box for the chiller 115.

Even if not depicted in the figures, a similar cover may be associated to the heat exchanger 135.

The heat pump module 500 according to the invention may further comprise decoupling elements 520 connected to the housing 200 and the chassis of the vehicle in which the heat pump assembly is intended to be installed. The decoupling elements 520 may be realized in a soft rubber. Such decoupling elements contribute to decrease the noise from the compression unit 10 by absorbing the low frequencies emitted by the compression unit 10.

Of course, the invention is not limited to the examples which have just been described and numerous adjustments can be made to these examples without departing from the scope of the invention. In particular, the characteristics of different variant embodiments of the invention can be combined to achieve the invention, to the extent that these variants are not incompatible with each other.

## Claims

1. One-piece casing (100) intended to encapsulate a portion (11) of a compression unit (10) of a heat pump module (500), **characterized in that** it comprises :
- an inner skin (101) having a complementary form to said portion (11) of the compression unit (10),
- an outer skin (102) comprising at least one housing portion (110, 120, 130) configured to accommodate an external component among a heat exchanger, an accumulator, a valve block assembly, said housing portion (110, 120, 130) comprising an interconnection surface (111, 121, 131) being of complementary form to said external component,
- a junction surface (103) intended to surround the portion (11) of the compression unit (10), the inner skin (101) and the outer skin (102) extending from the junction surface (103) on one side of the junction surface (103).

2. One-piece casing (100) according to claim 1, made of plastic.

3. One-piece casing (100) according to claim 1 or 2, wherein one of the at least one housing portion is a chamber (no, 130) configured to accommodate a first part of a heat exchanger, the chamber comprising an outer rim (112, 132) delimiting an internal container (113, 133) for the first part of the heat exchanger and an abutment (114, 134) for a surface of the first part of the heat exchanger, so as to position the heat exchanger

4. One-piece casing (100) according to any one of claims 1 to 3, wherein one of the at least one housing portion is an accumulator compartment (120) configured to accommodate an accumulator bottle, the interconnection surface (121) of the accumulator compartment presenting a curved surface.

5. Sealed envelope (510) intended to encapsulate a compression unit (10), comprising:
- a one-piece casing (100) according to any one of claims 1 to 4 intended to encapsulate a first portion (11) of the compression unit (10),
- a housing (200), preferably made of plastic, intended to encapsulate a second portion (12) of the compression unit (10), said housing comprising a joining surface (203) intended to surround the second portion (12) of the compression unit (10) and forming a surface contact with the junction surface (103).

6. Heat pump module (500) for a vehicle comprising a compression unit (10) having a first portion (11) and a second portion (12), and the sealed envelope (510) according to claim 5,
- the one-piece casing (100) encapsulating the first portion (11) of the compression unit (10),
- the housing (200) encapsulating the second portion (12) of the compression unit (10), the joining surface surrounding the second portion (12) of the compression unit (10).

7. Heat pump module (500) according to claim 6, comprising an acoustic layer (300), typically 15 to 30 mm thick, disposed between the compression unit (10) and the sealed envelope (510), said acoustic layer being preferably press fitted onto the compression unit (10).

8. Heat pump assembly for a vehicle, particularly for an electric vehicle, comprising a heat pump module (500) according to claim 6 or 7, and at least one external component among a heat exchanger (115, 135), an accumulator (125), a valve block assembly, accommodated in at least one housing portion (110, 120, 130) of the one-piece casing (100).

9. Heat pump assembly according to claim 8 in combination with claim 3, wherein one of the at least one external component is a heat exchanger (115, 135), preferably a chiller (115), a first part of the heat exchanger being disposed in the internal container (113, 133), a surface of the first part of the heat exchanger being in abutment against the abutment of the chamber, thereby creating an air insulation layer between the heat exchanger and the interconnection surface of the internal container (113, 133).

10. Heat pump assembly according to claim 9, further comprising a cover (116) encapsulating a second part of the heat exchanger (115, 135) and abutting the outer rim (112, 132) of the chamber (no, 130).

11. Heat pump assembly according to any one of claims 6 to 10, further comprising decoupling elements (520) connected to the housing (200) and a chassis of the vehicle.
